# EUROPÄISCHE PATENTSCHRIFT

(11) **EP 3 445 600 B1**
(45) Veröffentlichungstag und Bekanntmachung des Hinweises auf die Patenterteilung: **26.08.2020**
(21) Anmeldenummer: 17713251.1
(22) Anmeldetag: 23.03.2017
(51) Int. Cl.: B60K 1/00, F01P 3/00

(54) **VERFAHREN UND VORRICHTUNG ZUR BESTIMMUNG DER FLUSSRICHTUNG EINES KÜHLMEDIUMS**
METHOD AND DEVICE FOR DETERMINING THE FLOW DIRECTION OF A COOLANT
PROCÉDÉ ET DISPOSITIF POUR DÉTERMINER LE SENS DE CIRCULATION D'UN AGENT DE REFROIDISSEMENT

(30) Priorität: 22.04.2016 DE 102016206836
(43) Veröffentlichungstag der Anmeldung: 27.02.2019
(73) Patentinhaber: Robert Bosch GmbH, 70442 Stuttgart (DE)
(72) Erfinder: WARWEL, Manuel, 71636 Ludwigsburg (DE)
(86) Internationale Anmeldenummer: PCT/EP2017/056941
(87) Internationale Veröffentlichungsnummer: WO 2017/182226

(56) Entgegenhaltungen:
- WO-A1-2014/193297
- DE-A1- 10 356 443
- JP-A- 2000 146 656

## Beschreibung

Die Erfindung betrifft ein Verfahren und eine Vorrichtung zur Bestimmung der Flussrichtung eines Kühlmediums. Ferner betrifft die Erfindung einen Antriebsstrang mit einer entsprechenden Vorrichtung und ein Fahrzeug mit einem Antriebsstrang.

### Stand der Technik

Das Kühlen elektrischer und anderer Komponenten mit einem Kühlmedium, beispielsweise mit einer Kühlflüssigkeit oder mit einem Gasstrom, sind aus dem Stand der Technik bekannt. Bei mehreren zu kühlenden Komponenten werden diese nacheinander angeordnet. Das Kühlmedium strömt zur Kühlung der Komponenten an diesen nacheinander vorbei. Dabei wird den zu kühlenden Komponenten Wärme entzogen und von dem Kühlmedium aufgenommen. Bei dieser Anordnung werden die an vorderster Stelle angeordneten Komponenten mit einer größeren Kühlleistung gekühlt als die an späterer Stelle angeordneten Komponenten, da die Temperaturdifferenz zwischen den zu kühlenden Komponenten und dem Kühlmedium aufgrund der Erwärmung des Kühlmediums in Richtung der Strömungsrichtung oder Flussrichtung des Kühlmediums entlang der angeordneten Komponenten geringer wird. In einer derartigen Kühlstrecke oder einem Kühlkreislauf werden daher die Komponenten, die stärker gekühlt werden, zu Beginn des Kühlkreislaufes angeordnet und Komponenten, die weniger stark gekühlt werden, in Richtung des Endes der Kühlstrecke oder des Kühlkreislaufes angeordnet. Für den fehlerfreien Betrieb der Komponenten und des Kühlkreislaufes ist es notwendig, dass die Flussrichtung des Kühlmediums von den stärker zu kühlenden Komponenten in Richtung der weniger stark zu kühlenden Komponenten ausgerichtet ist. Es besteht daher das Bedürfnis für Verfahren und Vorrichtungen zur Bestimmung der Flussrichtung eines Kühlmediums.

Aus dem Dokument JP 2000 146656 A ist ein Durchflusssensor bekannt. Aus dem Dokument WO 2014/193297 ist eine Antriebsstrangtopologie und ein angetriebenes Fahrzeug bekannt.

### Offenbarung der Erfindung

Es wird ein Verfahren zur Bestimmung der Flussrichtung eines Kühlmediums, nach Anspruch 1, bereitgestellt. Das Kühlmedium, insbesondere eine Kühlflüssigkeit oder ein Gasstrom, wird an zwei nebeneinander oder nacheinander angeordnete Komponenten einer Kühlstrecke oder innerhalb eines Kühlkreislaufes vorbei geführt oder strömt daran vorbei. Das Verfahren umfasst das Ermitteln mindestens zweier Temperaturen, von denen jeweils eine einer der mindestens zwei nebeneinander angeordneten Komponenten zugeordnet wird. Das bedeutet, es werden die Temperaturen der mindestens zwei angeordneten Komponenten ermittelt indem beispielsweise die Temperaturen der einzelnen Komponenten direkt an der Komponente gemessen werden oder beispielsweise indirekt in der Nähe der Komponente, beispielsweise auf einer Trägerstruktur oder einer Kühlerstruktur gemessen werden. Alternativ ist auch die Messung einer Kühlmitteltemperatur möglich, beispielsweise in der Nähe oder unterhalb der Komponenten möglich zur Ermittlung einer Temperatur, die einer Komponente zugeordnet wird. Die Ermittlung kann auch eine Berechnung einer Temperatur anhand eines Wärmeübertragungsmodells zur möglichst genauen Bestimmung der Temperatur einer Komponente umfassen. Weiter wird die Differenz der ermittelten Temperaturen ermittelt und in Abhängigkeit der Differenz der Temperaturen wird die Flussrichtung des Kühlmediums bestimmt oder festgestellt. Die Bestimmung der Flussrichtung wird anhand des Temperaturgradienten des Kühlmediums aufgrund der gemessenen Temperaturen an den Komponenten bestimmt. Vorteilhaft wird ein Verfahren zur Bestimmung der Flussrichtung eines Kühlmediums bereitgestellt, wobei keine Beeinträchtigung des Kühlkreislaufes hierzu notwendig ist.

In einer anderen Ausgestaltung der Erfindung ist eine bestimmungsgemäße Flussrichtung vorgegeben. Weiter umfasst das Verfahren folgenden zusätzlichen Schritt: Einleiten von Sicherungsmaßnahmen bei Bestimmung der Flussrichtung in eine Richtung, die nicht mit der bestimmungsgemäßen Flussrichtung übereinstimmt.

Es ist eine bestimmungsgemäße Flussrichtung vorgegeben. Diese ist derart ausgerichtet, dass die stärker zu kühlenden Komponenten von dem noch nicht erwärmten Kühlmedium gekühlt werden. Die weniger zu kühlenden Komponenten werden an nachgeordneten Stellen oder in Richtung Ende des Kühlkreislaufes angeordnet. Diese Komponenten werden entsprechend weniger von dem bereits erwärmten Kühlmedium gekühlt. Das Verfahren umfasst den zusätzlichen Schritt des Einleitens von Sicherungsmaßnahmen für den Fall, dass als Flussrichtung eine Richtung bestimmt wird, die nicht mit der bestimmungsgemäßen Flussrichtung übereinstimmt. Vorteilhaft wird somit ein Verfahren bereitgestellt, welches einen sicheren Betrieb der zu kühlenden Komponenten ermöglicht. Für den Fall, dass die Flussrichtung des Kühlmediums nicht mit der bestimmungsgemäßen Flussrichtung übereinstimmt, wird die Möglichkeit zur Absicherung des Systems bereitgestellt.

In einer anderen Ausgestaltung der Erfindung umfasst das Einleiten von Sicherungsmaßnahmen mindestens einen der folgenden Schritte: Senden eines Fehlersignals und/oder mindestens leistungsreduziertes Betreiben mindestens einer Komponente oder Abschalten mindestens einer Komponente.

Vielfältige Sicherungsmaßnahmen zum Schutze der Komponenten und des Kühlsystems sind möglich. Insbesondere bietet es sich an, als Sicherungsmaßnahme ein Fehlersignal auszugeben, welches von einem entsprechenden Empfänger zur Ausführung weiterer Maßnahmen erfasst wird. Alternativ oder zusätzlich ist auch ein mindestens leistungsreduziertes Betreiben mindestens einer Komponente oder ein Abschalten mindestens einer Komponente vorgesehen. Unter dem Abschalten mindestens einer Komponente ist hierbei zu verstehen, dass diese Komponente außer Betrieb genommen wird oder nicht mehr aktiv betrieben wird, so dass diese Komponente keine Verluste mehr erzeugen kann und somit auch eine weitere Erwärmung durch diese Komponente selbst vermieden wird. Vorteilhaft werden unterschiedliche Sicherungsmaßnahmen zum Schutze der Komponenten und des Kühlkreislaufes bereitgestellt.

In einer anderen Ausgestaltung der Erfindung wirken die Komponenten in einem System zusammen. Das System selbst weist eine Betriebsfrequenz auf. Das Verfahren umfasst folgende weitere Schritte: Ermitteln der Betriebsfrequenz; Bestimmen der Flussrichtung des Kühlmediums in Abhängigkeit der ermittelten Betriebsfrequenz.

Die Komponenten sind Teile eines Systems, welches eine Betriebsfrequenz aufweist. Diese Betriebsfrequenz wird ermittelt und die Flussrichtung des Kühlmediums in Abhängigkeit dieser Betriebsfrequenz bestimmt. Vorteilhaft wird somit ein verbessertes Verfahren zur Bestimmung der Flussrichtung eines Kühlmediums bereitgestellt, wobei ein weiterer Betriebsparameter des Systems berücksichtigt wird.

In einer weiteren Ausgestaltung der Erfindung erfolgt die Bestimmung der Flussrichtung nicht, falls die ermittelte Betriebsfrequenz kleiner als eine vorgebbare Mindestbetriebsfrequenz ist.

Solange die Betriebsfrequenz geringer als eine Mindestbetriebsfrequenz ist, kann nicht sichergestellt werden, dass die Komponenten tatsächlich betrieben werden oder eine ausreichend große Erwärmung stattfindet, die die Grundlage für die Bestimmung der Flussrichtung anhand der Temperaturen der Komponenten ist.

In einem solchen Fall kann die Bestimmung der Flussrichtung fehlerhaft sein, da der Gradient der Temperatur des Kühlmediums zwischen den Komponenten möglicherweise nicht mit der Flussrichtung korreliert. Eine Bestimmung der Flussrichtung erfolgt gemäß dieser Ausgestaltung nur dann, falls die ermittelte Betriebsfrequenz groß genug ist, also größer als eine vorgebbare Mindestbetriebsfrequenz ist. Vorteilhaft wird ein verbessertes Verfahren zur sichereren Bestimmung der Flussrichtung bereitgestellt, bei dem die Betriebsfrequenz berücksichtigt wird.

In einer anderen Ausgestaltung der Erfindung ist das System ein elektrisches Antriebssystem und eine der Komponenten ist eine elektrische Maschine. Die Betriebsfrequenz ist die elektrische Frequenz der elektrischen Maschine. Zusätzlich oder alternativ umfasst das System einen elektrischen Wandler und eine der Komponenten ein Leistungsmodul mit mindestens einem Schaltelement. Dabei kann die Betriebsfrequenz die Frequenz der Modulation des Schaltelements sein.

Die Komponenten sind beispielsweise eine elektrische Maschine oder Leistungsmodule durch die große elektrische Ströme fließen bei großen elektrischen Spannungen. Mit zunehmender Betriebsfrequenz entsteht zunehmend Verlustwärme, die von dem Kühlmedium aufgenommen wird und zur Erwärmung des Kühlmediums führt. Vorteilhaft wird ein Verfahren bereitgestellt, bei dem die Komponenten des Systems eine elektrische Maschine oder ein Leistungsmodul umfassen.

In einer anderen Ausgestaltung der Erfindung weisen die Komponenten im Betrieb eine Verlustleistung auf. Das Verfahren umfasst folgende weitere Schritte: Ermitteln der Verlustleistung mindestens einer Komponente; Bestimmen der Flussrichtung des Kühlmediums in Abhängigkeit der ermittelten Verlustleistung.

Während des Betriebs weisen die Komponenten eine Verlustleistung auf. Das bedeutet, dass die Komponenten sich während des Betriebs aufgrund der abgegebenen Verlustleistung erwärmen. Diese Verlustleistung wird ermittelt und bei der Bestimmung der Flussrichtung des Kühlmediums berücksichtigt.

Vorteilhaft wird ein verbessertes Verfahren zur Bestimmung der Flussrichtung eines Kühlmediums bereitgestellt.

In einer anderen Ausgestaltung der Erfindung erfolgt die Bestimmung der Flussrichtung nicht, falls die ermittelte Verlustleistung kleiner als eine vorgebbare Mindestverlustleistung ist.

Solange die Verlustleistung mindestens einer Komponente geringer als eine Mindestverlustleistung ist, kann nicht sichergestellt werden, dass die Komponenten tatsächlich betrieben werden oder eine ausreichend große Erwärmung stattfindet, die die Grundlage für die Bestimmung der Flussrichtung anhand der Temperaturen der Komponenten ist. In einem solchen Fall kann die Bestimmung der Flussrichtung fehlerhaft sein, da der Gradient der Temperatur des Kühlmediums zwischen den Komponenten möglicherweise nicht mit der Flussrichtung korreliert. Vorteilhaft wird ein verbessertes Verfahren zur sichereren Bestimmung der Flussrichtung bereitgestellt, bei dem die Verlustleistung mindestens einer Komponente berücksichtigt wird.

In einer anderen Ausgestaltung der Erfindung werden die Komponenten mindestens zeitweise von elektrischem Strom durchflossen.

Bei den Komponenten handelt es sich um zumindest teilweise und zeitweise von elektrischem Strom durchflossenen Komponenten. Gemäß dieser Ausgestaltung handelt es sich also nicht um rein mechanische zu kühlende Komponenten. Vorteilhaft wird ein Verfahren zur Bestimmung der Flussrichtung eines Kühlmediums, welches zumindest teilweise elektrische Komponenten kühlt, bereitgestellt.

In einer anderen Ausgestaltung der Erfindung sind die Komponenten Leistungsmodule mit Schaltelementen eines Wandlers, insbesondere eines Wechselrichters oder Inverters oder DC/DC-Wandlers oder Zellen einer Batterie mit serieller Kühlung der Zellen. Alternativ können die Komponenten auch eine elektrische Maschine umfassen.

Die Komponenten sind beispielsweise Leistungsmodule, also elektrische Module, die Schaltelemente, insbesondere Halbleiterschalter, aufweisen. Diese Leistungsmodule werden mit geringen Strömen und Spannungen angesteuert. Die Schaltelemente selbst schalten jedoch große elektrische Leistungen, Ströme und/oder Spannungen. Bei der Leitung und dem Schalten dieser großen elektrischen Energie entsteht Verlustwärme, die von dem Kühlmedium aufgenommen wird und zur Erwärmung des Kühlmediums führt. Analog dazu erwärmt sich auch eine elektrische Maschine im Betrieb oder erwärmen sich auch die Zellen einer Batterie bei Entladung und Aufladung der Batterie. Vorteilhaft wird ein Verfahren bereitgestellt, bei dem die Komponenten als Leistungsmodule oder Zellen einer Batterie ausgeführt sind oder die Komponenten eine elektrische Maschine umfassen.

Ferner betrifft die Erfindung ein Computerprogramm, das eingerichtet ist, die bisher beschriebenen Verfahren auszuführen.

Ferner umfasst die Erfindung ein maschinenlesbares Speichermedium, auf dem das beschriebene Computerprogramm gespeichert ist.

Ferner umfasst die Erfindung eine Vorrichtung zur Bestimmung der Flussrichtung eines Kühlmediums, nach Anspruch 1. Das Kühlmedium strömt dabei zur Kühlung mindestens zweier nebeneinander angeordneter Komponenten nacheinander an diesen Komponenten vorbei. Weiter umfasst die Vorrichtung eine Logikeinrichtung, die dazu eingerichtet ist, die bisher beschriebenen Verfahren zur Bestimmung der Flussrichtung eines Kühlmediums auszuführen. Hierzu empfängt die Logikeinrichtung Temperatursignale von entsprechenden den Komponenten zugeordneten Sensoreinrichtungen, ermittelt die Differenz zwischen den übermittelten Temperaturen und bestimmt die Flussrichtung des Kühlmediums. Vorteilhaft wird somit eine Vorrichtung bereitgestellt, die derart eingerichtet ist, dass die bisher beschriebenen Verfahren zur Bestimmung der Flussrichtung eines Kühlmediums ausgeführt werden können.

Ferner umfasst die Erfindung einen Antriebsstrang mit einer beschriebenen Vorrichtung. Ein derartiger Antriebsstrang dient beispielsweise dem Antrieb eines elektrischen Fahrzeugs. Er umfasst insbesondere eine Energiequelle oder Batterie, einen DC/DC Wandler, einen Pulswechselrichter, und/ oder eine daran anschließbare elektrische Maschine. Mittels des Verfahrens und der Vorrichtung wird ein sicherer Betrieb des Antriebsstrangs ermöglicht.

Ferner umfasst die Erfindung ein Fahrzeug, mit einem beschriebenen Antriebsstrang. Vorteilhaft wird somit ein Fahrzeug bereitgestellt, welches eine Vorrichtung umfasst, mit der die Flussrichtung eines Kühlmediums bestimmt werden kann.

Es versteht sich, dass die Merkmale, Eigenschaften und Vorteile des erfindungsgemäßen Verfahrens entsprechend auf die Vorrichtung bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
- Figur 1: ein Verfahren zur Bestimmung der Flussrichtung eines Kühlmediums,
- Figur 2: ein schematisch dargestellte zu kühlendes System,
- Figur 3: ein schematisch dargestelltes Fahrzeug mit einem Antriebsstrang.

### Ausführungsformen der Erfindung

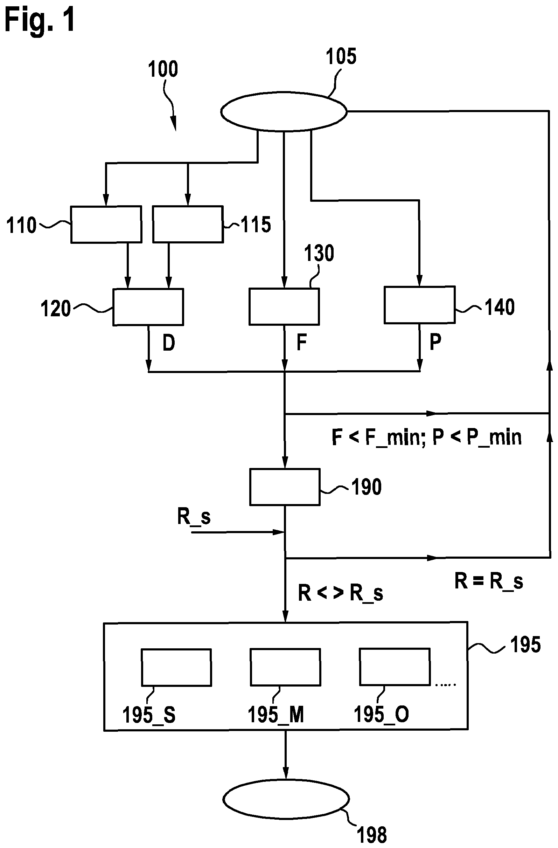

Die Figur 1 zeigt ein Verfahren 100 zur Bestimmung der Flussrichtung R eines Kühlmediums M. Mit Schritt 105 beginnt das Verfahren. In Schritt 110 wird eine erste Temperatur ermittelt, die einer ersten Komponente K1 zugeordnet wird, in Schritt 115 wird eine zweite Temperatur ermittelt, die einer zweiten Komponente K2 zugeordnet wird. Die erste Komponente K1 und die zweite Komponente K2 sind nebeneinander oder nacheinander in dem Sinne angeordnet, dass ein daran vorbeifließendes Kühlmedium M zunächst an der erste Komponente K1 und zu einem späteren Zeitpunkt an der Komponente K2 vorbeifließt. Es sind auch weitere Komponenten K_n denkbar, an denen das Kühlmedium M vorbeifließt. In weiteren Schritten könnten auch die Temperaturen der weiteren Komponenten ermittelt werden. Die Ermittlung der Temperaturen der einzelnen Komponenten erfolgt im Wesentlichen gleichzeitig, sodass ein Vergleich der Temperaturen der Komponenten von einem Zeitpunkt möglich ist. In Schritt 120 wird die Differenz D der ermittelten Temperaturen ermittelt. Diese Differenz D ist ein Maß für den Temperaturgradienten des Kühlmediums von einer ersten zu einer zweiten Komponente oder von den weiteren Komponenten zueinander. In einem zeitlich parallel zu der Messung der Temperaturen erfolgenden Schritt 130 kann die Ermittlung einer Betriebsfrequenz F des Systems 200, dem auch die Komponenten K1, K2 angehören, erfolgen. Weiter kann zeitlich parallel dazu eine Verlustleistung P mindestens einer der Komponenten K1, K2 in Schritt 140 ermittelt werden. Für den Fall, dass eine Betriebsfrequenz F oder auch eine Verlustleistung P ermittelt wird, besteht die Möglichkeit eine Bestimmung der Flussrichtung eines Kühlmediums nicht auszuführen, falls die Betriebsfrequenz F kleiner einer Mindestbetriebsfrequenz F_min oder die Verlustleistung P kleiner einer Mindestverlustleistung P_min ist. Das Programm verzweigt in diesem Fall zurück zu Schritt 105. Falls die Betriebsfrequenz F größer als der Mindestwert und/oder die Verlustleistung größer als der Mindestwert ist, wird in Schritt 190 die Flussrichtung R des Kühlmediums in Abhängigkeit der ermittelten Temperaturfrequenz D und, wenn verfügbar, der Betriebsfrequenz F und der Verlustleistung P bestimmt. Die Flussrichtung wird in Abhängigkeit der Differenz D der Temperaturen der Komponenten K1, K2 in Richtung der wärmeren Komponente K1, K2 bestimmt. Für den Fall, dass die Betriebsfrequenz F bzw. die Verlustleitung P geringer als die vorgegebenen Mindestwerte F_min oder P_min sind, erfolgt keine Bestimmung der Flussrichtung, da sich eventuell keine Differenz D der Temperaturen eingestellt hat, die mit der Flussrichtung R des Kühlmediums M korreliert. Dem Verfahren wird eine bestimmungsgemäße Flussrichtung R_s vorgegeben. Falls die bestimmte Flussrichtung R mit der vorgegebenen Flussrichtung R_s übereinstimmt, verzweigt das Verfahren zurück zu Schritt 105 zum erneuten Starten des Verfahrens. Falls die bestimmte Flussrichtung R ungleich der vorgegebenen Flussrichtung R_s ist, werden mit Schritt 195 Sicherungsmaßnahmen eingeleitet. Diese Sicherungsmaßnahmen umfassen beispielsweise das Senden eines Fehlersignals in Schritt 195_S an einen entsprechenden Empfänger, beispielsweise ein Display für einen Benutzer oder ein Steuergerät. Eine zusätzliche oder alternative Sicherungsmaßnahme wird beispielsweise in Schritt 195_M durchgeführt. Es wird für den weiteren Betrieb der Komponenten K1, K2 ein leistungsreduzierter Betrieb mindestens einer der Komponenten K1, K2 vorgesehen. Eine andere Alternative wäre ein Abschalten mindestens einer der Komponenten K1, K2 in Schritt 195_O. Neben diesen beschriebenen Sicherungsmaßnahmen 195_x sind auch andere denkbar, die dazu führen, dass ein weiteres Erwärmen des Systems 200 vermieden wird. Mit Schritt 198 endet das Verfahren.

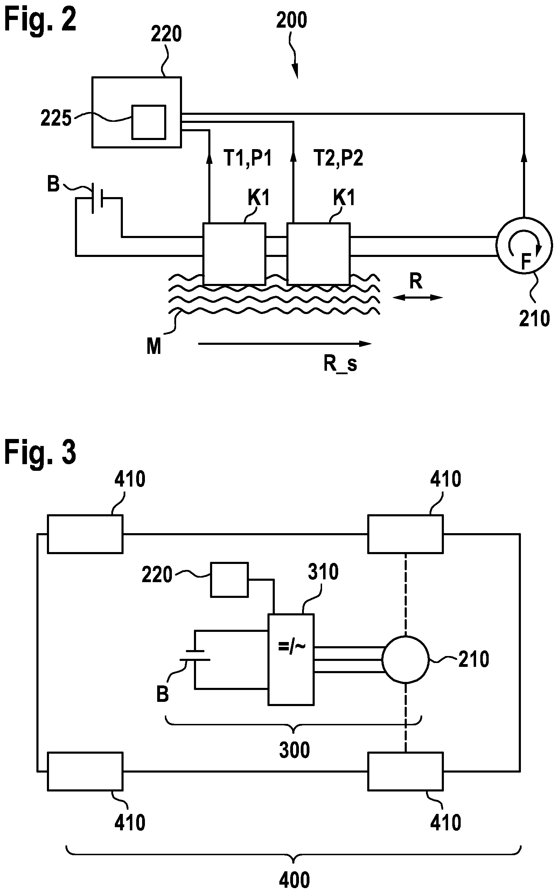

Figur 2 zeigt ein Systems 200, beispielsweise ein elektrisches Antriebssystem mit einer elektrischen Maschine 210, welche mit einer Betriebsfrequenz F betrieben wird. Die elektrische Maschine wird mit Energie aus einer Batterie B versorgt. Die elektrische Energie aus der Batterie B wird über zwei Komponenten K1 und K2 geleitet und an die elektrische Maschine 210 weitergeführt. Die beiden elektrischen Komponenten K1 und K2 dienen beispielsweise der Wandlung einer Gleichspannung der Batterie B in eine Wechselspannung zur Versorgung der elektrischen Maschine 210. Hierzu weisen die Komponenten K1 und K2 beispielsweise Schaltelemente auf, um einen Stromfluss von einem Eingang zu einem Ausgang der Komponente K1 oder K2 zu führen. Die Komponenten K1 und K2 werden von einem Kühlmedium M mindestens teilweise umströmt wobei gemäß einer Vorzugsrichtung R_s das Medium zunächst an der Komponente K1 und an eine Komponente K2 vorbeiströmt. Das Medium fließt in der Flussrichtung R entlang der Komponenten K1 und K2. Weiter ist eine Vorrichtung 220 vorgesehen, welche eine Logikeinrichtung 225 umfasst. Es werden die Temperaturen T1, T2 der Komponente K1 und K2 ermittelt und an die Vorrichtung 220 übertragen. Gegebenenfalls werden auch die Verlustleistungen P1, P2 der zwei Komponenten K1, K2 und/oder auch die Betriebsfrequenz F des elektrischen Systems 200 oder insbesondere der elektrischen Maschine 210 an die Vorrichtung 220 übertragen. In der Vorrichtung 220 mit der Logikeinrichtung 225 werden die ermittelten Daten erfasst und das Verfahren wie oben beschrieben, ausgeführt, so dass die aktuelle Flussrichtung R bestimmt wird. Für den Fall, dass R mit der vorgegebenen Flussrichtung R_s übereinstimmt, wird das Verfahren erneut wiederholt. Für den Fall, dass die bestimmte Flussrichtung R nicht mit der vorgegebenen Flussrichtung R_s übereinstimmt, werden die genannten Sicherungsmaßnahmen eingeleitet. Somit wird ein sicherer Betrieb des Systems ermöglicht.

Die Figur 3 zeigt einen Antriebsstrang 300, welcher wiederum eine Batterie B zur Versorgung einer elektrischen Maschine 210 umfasst. Ein Wechselrichter 310 wandelt die elektrische Energie der Batterie B in eine Wechselspannung um zur Versorgung der elektrischen Maschine 210. Die Vorrichtung 220 dient der Ansteuerung des Wechselrichters 310, der wiederum die Komponenten K1 und K2 umfasst, die von dem Kühlmedium M gekühlt werden. Unabhängig von der gewählten Darstellung kann die Vorrichtung 220 beispielsweise auch innerhalb des Wechselrichters 310 angeordnet sein. Die Vorrichtung 220 ist dazu eingerichtet, die beschriebenen Verfahren durchzuführen. Weiter zeigt die Figur 3 ein schematisch dargestelltes Fahrzeug 400 mit vier Rädern 410, wobei das Fahrzeug einen Antriebsstrang 300 mit einer Vorrichtung 220 umfasst.

## Patentansprüche

1. Verfahren (100) zur Bestimmung einer Flussrichtung (R) eines Kühlmediums (M),
wobei das Kühlmedium (M) zur Kühlung mindestens zweier nebeneinander angeordneter Komponenten (K1, K2) einer Kühlstrecke oder innerhalb eines Kühlkreislaufes nacheinander an diesen Komponenten (K1, K2) vorbeiströmt, mit den Schritten:
Ermitteln einer ersten Temperatur (110), die der ersten Komponente (K1) der mindestens zwei nebeneinander angeordneten Komponenten zugeordnet wird;
Ermitteln einer zweiten Temperatur (115), die der zweiten Komponente (K2) der mindestens zwei nebeneinander angeordneten Komponenten zugeordnet wird;
Ermitteln einer Differenz (120) der ermittelten Temperaturen;
Bestimmen der Flussrichtung (190) des Kühlmediums in Abhängigkeit der ermittelten Differenz.

2. Verfahren (100) nach Anspruch 1,
wobei eine bestimmungsgemäße Flussrichtung (R_S) vorgegeben ist, mit den zusätzlichen Schritten:
Einleiten von Sicherungsmaßnahmen (195) bei Bestimmung der Flussrichtung (190, R) in eine Richtung, die nicht mit der bestimmungsgemäßen Flussrichtung (R_S) übereinstimmt.

3. Verfahren (100) nach Anspruch 2,
wobei das Einleiten von Sicherungsmaßnahmen (195) mindestens einen der folgenden Schritte umfasst:
Senden eines Fehlersignals (195_S) und/ oder
mindestens leistungsreduziertes Betreiben mindestens einer Komponente (195_M)
oder Abschalten mindestens einer Komponente (195_O).

4. Verfahren (100) nach einem der vorhergehenden Ansprüche,
wobei die Komponenten (K1, K2) in einem System (200) zusammenwirken und das System (200) eine Betriebsfrequenz (F) aufweist mit den zusätzlichen Schritten:
Ermitteln der Betriebsfrequenz (130);
Bestimmen der Flussrichtung (190) des Kühlmediums in Abhängigkeit der ermittelten Betriebsfrequenz (F).

5. Verfahren (100) nach Anspruch 4,
wobei eine Bestimmung der Flussrichtung (190) nicht erfolgt, falls die ermittelte Betriebsfrequenz (F) kleiner als eine vorgebbare Mindestbetriebsfrequenz (F_Min) ist.

6. Verfahren (100) nach Anspruch 4 oder 5,
wobei das System (200) ein elektrisches Antriebssystem ist und eine der Komponenten (K1, K2) eine elektrische Maschine (210) ist, und die Betriebsfrequenz (F) die elektrische Frequenz der elektrischen Maschine (210) ist
oder wobei das System (200) einen elektrischen Wandler umfasst und eine der Komponenten (K1, K2) ein Leistungsmodul mit mindestens einem Schaltelement ist, und die Betriebsfrequenz (F) die Frequenz der Modulation des Schaltelements ist.

7. Verfahren (100) nach einem der vorhergehenden Ansprüche,
wobei die Komponenten (K1, K2) im Betrieb eine Verlustleistung (P) aufweisen,
mit den zusätzlichen Schritten:
Ermitteln der Verlustleitung (140) mindestens einer Komponente;
Bestimmen der Flussrichtung (190) des Kühlmediums in Abhängigkeit der ermittelten Verlustleistung (P).

8. Verfahren (100) nach Anspruch 7,
wobei eine Bestimmung der Flussrichtung (190) nicht erfolgt, falls die ermittelte Verlustleistung (P) kleiner als eine vorgebbare Mindestverlustleistung ist (P_Min).

9. Verfahren (100) nach Anspruch 7 oder 8,
wobei die Komponenten (K1, K2) mindestens zeitweise von elektrischem Strom durchflossen werden.

10. Verfahren (100) nach einem der Ansprüche 7 bis 9,
wobei die Komponenten (K1, K2) mindestens ein Leistungsmodul mit einem Schaltelement eines Wandlers umfassen
oder wobei die Komponenten (K1, K2) mindestens eine elektrische Maschine (210) umfassen.

11. Computerprogramm, das eingerichtet ist, das Verfahren (100) nach einem der Ansprüche 1-10 auszuführen.

12. Maschinenlesbares Speichermedium, auf dem das Computerprogramm nach Anspruch 11 gespeichert ist.

13. Vorrichtung (220) zur Bestimmung einer Flussrichtung (R) eines Kühlmediums (M),
wobei das Kühlmedium (M) zur Kühlung mindestens zweier nebeneinander angeordneter Komponenten (K1, K2) einer Kühlstrecke oder innerhalb eines Kühlkreislaufes nacheinander an diesen Komponenten (K1, K2) vorbeiströmt,
mit einer Logikeinrichtung (225) die dazu eingerichtet ist, ein Verfahren (100) nach einem der Ansprüche 1 bis 10 durchzuführen.

14. Antriebsstrang (300) mit einer Vorrichtung (220) gemäß Anspruch 13.

15. Fahrzeug (400) mit einem Antriebsstrang (300) nach Anspruch 14.

## Claims

1. Method (100) for determining a flow direction (R) of a coolant (M),
wherein for the purpose of cooling at least two juxtaposed components (K1, K2) of a cooling section or within a cooling circuit the coolant (M) flows past these components (K1, K2) in succession, with the following steps:
ascertaining a first temperature (110) which is assigned to the first component (K1) of the at least two juxtaposed components;
ascertaining a second temperature (115) which is assigned to the second component (K2) of the at least two juxtaposed components;
ascertaining a difference (120) of the ascertained temperatures;
determining the flow direction (190) of the coolant as a function of the ascertained difference.

2. Method (100) according to Claim 1,
wherein a designated flow direction (R_S) has been predetermined, with the following additional steps:
initiating safeguarding measures (195) in the course of determining the flow direction (190, R) in a direction that does not coincide with the designated flow direction (R_S) .

3. Method (100) according to Claim 2,
wherein the initiating of safeguarding measures (195) comprises at least one of the following steps:
sending a fault signal (195_S) and/or
at least reduced-power operation of at least one component (195_M)
or shutting down at least one component (195_O).

4. Method (100) according to one of the preceding claims,
wherein the components (K1, K2) interact in a system (200),
and the system (200) has an operating frequency (F) with the following additional steps:
ascertaining the operating frequency (130);
determining the flow direction (190) of the coolant as a function of the ascertained operating frequency (F).

5. Method (100) according to Claim 4,
wherein a determination of the flow direction (190) does not occur if the ascertained operating frequency (F) is lower than a predeterminable minimum operating frequency (F_min).

6. Method (100) according to Claim 4 or 5,
wherein the system (200) is an electric drive system, and one of the components (K1, K2) is an electric machine (210), and the operating frequency (F) is the electrical frequency of the electric machine (210)
or wherein the system (200) includes an electrical converter, and one of the components (K1, K2) is a power module with at least one switching element, and the operating frequency (F) is the frequency of modulation of the switching element.

7. Method (100) according to one of the preceding claims,
wherein the components (K1, K2) exhibit a dissipated power (P) in operation,
with the following additional steps:
ascertaining the dissipated power (140) of at least one component;
determining the flow direction (190) of the coolant as a function of the ascertained dissipated power (P).

8. Method (100) according to Claim 7,
wherein a determination of the flow direction (190) does not occur if the ascertained dissipated power (P) is less than a predeterminable minimum dissipated power(P_min).

9. Method (100) according to Claim 7 or 8,
wherein the components (K1, K2) are flowed through by electric current at least temporarily.

10. Method (100) according to one of Claims 7 to 9, wherein the components (K1, K2) include at least one power module with a switching element of a converter or wherein the components (K1, K2) include at least one electric machine (210).

11. Computer program that has been set up to carry out the method (100) according to one of Claims 1-10.

12. Machine-readable storage medium on which the computer program according to Claim 11 has been stored.

13. Device (220) for determining a flow direction (R) of a coolant (M),
wherein for the purpose of cooling at least two juxtaposed components (K1, K2) of a cooling section or within a cooling circuit the coolant (M) flows past these components (K1, K2) in succession,
with a logic unit (225) which has been set up to implement a method (100) according to one of Claims 1 to 10.

14. Drive train (300) with a device (220) according to Claim 13.

15. Vehicle (400) with a drive train (300) according to Claim 14.

## Revendications

1. Procédé (100) de détermination d'une direction d'écoulement (R) d'un fluide de refroidissement (M),
le fluide de refroidissement (M) s'écoulant successivement au niveau d'au moins deux composants (K1, K2) disposés l'un à côté de l'autre d'un tronçon de refroidissement ou à l'intérieur d'un circuit de refroidissement en vue de refroidir ces composants (K1, K2), comprenant les étapes suivantes :
identification d'une première température (110), qui est associée au premier composant (K1) des moins deux composants disposés l'un à côté de l'autre ;
identification d'une deuxième température (115), qui est associée au deuxième composant (K2) des moins deux composants disposés l'un à côté de l'autre ;
identification d'une différence (120) entre les températures déterminées ;
détermination de la direction d'écoulement (190) du fluide de refroidissement en fonction de la différence identifiée.

2. Procédé (100) selon la revendication 1, une direction d'écoulement conforme aux prescriptions (R_S) étant prédéfinie, avec les étapes suivantes :
initiation de mesures de sécurité (195) en cas de détermination de la direction d'écoulement (190, R) dans une direction qui ne coïncide pas avec la direction d'écoulement conforme aux prescriptions (R_S).

3. Procédé (100) selon la revendication 2, l'initiation de mesures de sécurité (195) comprenant au moins l'une des étapes suivantes :
émission d'un signal de défaut (195_S) et/ou fonctionnement au moins en puissance réduite d'au moins un composant (195_M)
ou mise à l'arrêt d'au moins un composant (195_O).

4. Procédé (100) selon l'une des revendications précédentes, les composants (K1, K2) coopérant dans un système (200) et le système (200) possédant une fréquence de fonctionnement (F),
comprenant les étapes supplémentaires suivantes :
identification de la fréquence de fonctionnement (130) ;
détermination de la direction d'écoulement (190) du fluide de refroidissement en fonction de la fréquence de fonctionnement (F) identifiée.

5. Procédé (100) selon la revendication 4, une détermination de la direction d'écoulement (190) n'étant pas effectuée dans le cas où la fréquence de fonctionnement (F) identifiée est inférieure à une fréquence de fonctionnement minimale (F_Min) pouvant être prédéfinie.

6. Procédé (100) selon la revendication 4 ou 5,
le système (200) étant un système d'entraînement électrique et l'un des composants (K1, K2) étant une machine électrique (210) et la fréquence de fonctionnement (F) étant la fréquence électrique de la machine électrique (210),
ou le système (200) comprenant un convertisseur électrique et l'un des composants (K1, K2) étant un module de puissance comprenant au moins un élément de commutation, et la fréquence de fonctionnement (F) étant la fréquence de modulation de l'élément de commutation.

7. Procédé (100) selon l'une des revendications précédentes,
les composants (K1, K2) présentant une puissance dissipée (P) en fonctionnement,
comprenant les étapes supplémentaires suivantes :
identification de la puissance dissipée (140) d'au moins un composant ;
détermination de la direction d'écoulement (190) du fluide de refroidissement en fonction de la puissance dissipée (P) identifiée.

8. Procédé (100) selon la revendication 7, une détermination de la direction d'écoulement (190) n'étant pas effectuée dans le cas où la puissance dissipée (P) identifiée est inférieure à une puissance dissipée minimale (P_Min) pouvant être prédéfinie.

9. Procédé (100) selon la revendication 7 ou 8, les composants (K1, K2) étant au moins temporairement parcourus par un courant électrique.

10. Procédé (100) selon l'une des revendications 7 à 9, les composants (K1, K2) comprenant au moins un module de puissance doté d'un élément de commutation d'un convertisseur,
ou les composants (K1, K2) comprenant au moins une machine électrique (210).

11. Programme informatique, qui est conçu pour mettre en œuvre le procédé (100) selon l'une des revendications 1 à 10.

12. Support d'enregistrement lisible par machine sur lequel est enregistré le programme informatique selon la revendication 11.

13. Arrangement (220) de détermination d'une direction d'écoulement (R) d'un fluide de refroidissement (M),
le fluide de refroidissement (M) s'écoulant successivement au niveau d'au moins deux composants (K1, K2) disposés l'un à côté de l'autre d'un tronçon de refroidissement ou à l'intérieur d'un circuit de refroidissement en vue de refroidir ces composants (K1, K2),
comprenant un dispositif logique (225) qui est conçu pour mettre en œuvre le procédé (100) selon l'une des revendications 1 à 10.

14. Chaîne cinématique (300) comprenant un arrangement (200) selon la revendication 13.

15. Véhicule (400) équipé d'une chaîne cinématique (300) selon la revendication 14.
